# EUROPEAN PATENT APPLICATION

(11) **EP 4 840 897 A1**
(43) Date of publication of application: **18.11.2026**
(21) Application number: 25175830.6
(22) Date of filing: 12.05.2025
(51) Int. Cl.: C08H 7/00, C07G 1/00, D21C 11/00

(54) **REACTIVE LIGNIN FRAGMENTS**

(71) Applicant: Bloom Biorenewables SA, 1723 Marly (CH)
(72) Inventor: CHARMILLOT, Justine, 1004 Lausanne (CH); MANKER, Lorenz, 1006 Lausanne (CH)
(74) Representative: Schaad, Balass, Menzl & Partner AG

(57) **Abstract**

The present invention relates to lignin fragments A comprising at least monomer units (I) and (II) 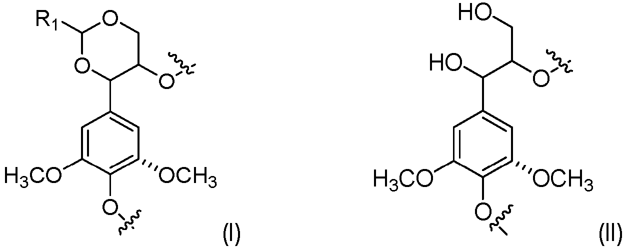 wherein
R₁ is selected from the group consisting of methyl, ethyl, propyl, isopropyl and n-butyl, and wherein the lignin fragments A have an average aliphatic hydroxyl group content of more than 3 mmol/g.

## Description

The present invention relates to reactive lignin fragments and a method for preparing such lignin fragments.

Reactive polyols are chemical compounds that contain two or more reactive hydroxyl groups and play a crucial role in the manufacturing and modification of polymers. They are essential components in a variety of applications, including composite materials, coatings, and elastomers. In the polymer industry, reactive polyols enable the precise tailoring of material properties such as toughness, flexibility, thermal resistance, and chemical resistance. These attributes are particularly important in applications that are subjected to high mechanical demands or extreme environmental conditions.

In composite materials, reactive polyols help enhance structural integrity and mechanical performance by forming a robust cross-linked network. In coatings, they improve resistance to weathering, while in elastomers, the polymerization of reactive polyols results in exceptional stretchability and resilience, making them ideal for seals, vibration dampeners, and other technical applications.

Currently, most reactive polyols are derived from petroleum-based resources. This reliance on fossil fuels poses challenges regarding the sustainability and ecological footprint of the produced materials. However, there are several bio-based polyols, specifically diols, that are not derived from petroleum but instead produced from renewable resources. One notable example is 1,3-propanediol (PDO), which can be obtained through the microbial fermentation of sugars from corn or sugarcane. Another important diol is 1,4-butanediol (BDO), which can also be produced via biotechnological processes using sugars or lignocellulosic biomass as feedstock. Glycerol, a byproduct of biodiesel production from plant oils, serves as a versatile bio-based diol and can be further modified into a variety of polyol structures. Isosorbide, derived from sorbitol acts as a rigid diol useful in creating durable bio-based polymers. Additionally, sugar alcohols such as erythritol and xylitol, which can be sourced from biomass, offer potential as building blocks for linear or branched diols suitable for specialized applications. These bio-based diols are increasingly used in the production of polyesters, polyurethanes, and other polymeric materials in order to reduce dependence on fossil resources and enhance the sustainability of chemical products. However, one important aspect to consider is that these bio-based diols typically do not contain aromatic structures. Aromatic compounds are crucial in many applications involving composite materials, coatings, and elastomers because they provide specific properties such as enhanced heat resistance, chemical stability, and mechanical strength.

Lignin is the second most abundant natural polymer and the largest source of natural aromatic monomers. It represents a vast, yet largely untapped, reservoir of renewable carbon with the potential to be used as a feedstock for fuels, chemicals, and materials. Currently, most lignin is produced as an industrial byproduct in pulp and paper production - such as through the Kraft process - and several million tons are generated annually, predominantly used as a low-cost fuel for energy and heat.

Lignin is rich in aromatic rings, which contribute to its mechanical strength, rigidity, and functional versatility. With its natural origin and performance-enhancing properties, lignin holds great promise for driving eco-friendly innovation. There are several methods for obtaining lignin fragments. Sun et al, Bright Side of Lignin Depolymerization: Toward New Platform Chemicals, Chem. Rev. 2018, 118, 614-678 discloses various lignin isolation methods and catalytic approaches, particularly those that preserve the β-O-4 linkages, which can significantly influence product yields and composition.

Aldehyde Assisted Fractionation (AAF) is a more recent technique that employs aldehydes to assist in the selective extraction of lignin. This method enhances the yield of lignin fragments with desirable properties while maintaining high purity and quality. For example, WO2017178513A1 discloses the production of monomers and fragments from lignin during depolymerisation of lignocellulose-containing composition in the presence of an aldehyde.

Milled wood lignin (MWL), isolated via the Björkman process, represents one of the most structurally preserved forms of lignin available for research purposes. The main advantage of this method lies in its ability to extract lignin under very mild conditions, without the harsh chemical treatments typical of industrial pulping processes. As a result, the lignin obtained retains many of its original structural features, making it ideal for fundamental research, particularly in structural analysis using techniques like NMR spectroscopy or size exclusion chromatography. Because MWL is soluble in organic solvents, it is much easier to characterize than lignin isolated through more aggressive methods. However, the process is time-consuming, non-scalable, and yields only a small fraction, typically around 1-5% of the total lignin content.

The problem of the present invention is to provide biobased reactive polyols for industrial applications, along with a cost-efficient method that enables the scale-up of their production.

The problem is solved by the lignin fragments A according to claim 1. Further preferred embodiments are subject of dependent claims 2 to 15.

It was found that the lignin fragments A according to the present invention are excellent reactive polyols. They comprise at least monomer units (I) and (II) 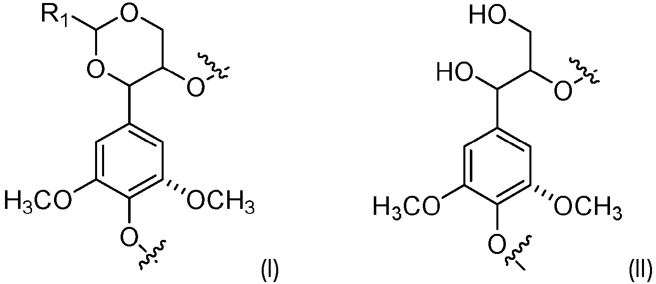 wherein
R₁ is selected from the group consisting of methyl, ethyl, propyl, isopropyl and n-butyl, and wherein the lignin fragments A have an average aliphatic hydroxyl group content of more than 3 mmol/g.

It has been found that the polyols according to the invention can be produced very easily in a two-step process, where lignin fragments are first produced through aldehyde-assisted fractionation, which are then deprotected in a second step, thereby partially removing the acetal. This enables the straightforward production of reactive polyols. However, it was found that R₁ plays a crucial role. For example, deprotecting the fragments was not possible if R₁ was hydrogen (i.e., if the protection was conducted in the presence of formaldehyde) or COOH (i.e., if the protection was conducted with glyoxylic acid), as both have a tendency to self-react. When R₁ is selected from the group consisting of methyl, ethyl, propyl, isopropyl, and n-butyl, deprotection is possible without the formation of undesirable by-products. This method is straightforward, cost-effective, suitable for scaling up, and utilizes renewable resources.

Within the context of the present invention, the term lignin fragment A stands for lignin fragments that underwent the deprotecting step, i.e. have an average aliphatic hydroxyl group content of more than 3 mmol/g, whereas the term lignin fragment B stands for lignin fragments obtained after aldehyde-assisted fractionation, i.e. have an average aliphatic hydroxyl group content of less than 2 mmol/g.

The term "an average aliphatic hydroxyl group content" refers to the mean quantity of hydroxyl (-OH) groups that are bonded to aliphatic (non-aromatic) carbon atoms within the structure of lignin. In this context, it represents how many such groups are present per unit mass of lignin, expressed in millimoles per gram (mmol/g). These aliphatic hydroxyl groups are located on the side chains of lignin's phenylpropane units and differ from phenolic hydroxyl groups, which are attached directly to aromatic rings.

The dashed lines in monomer units I and II indicate that hydroxymethyl and secondary methoxy groups are present in some, but not all, instances.

The lignin fragments A according to the present invention have an average aliphatic hydroxyl group content of more than 3 mmol/g which enhances the reactivity of said fragments, resulting in a greater number of reactive sites available for chemical reactions. Consequently, this promotes faster and more efficient crosslinking, leading to improved mechanical properties in the final products. Furthermore, lignin fragments A with a higher hydroxyl group content enable the production of materials with superior physical and chemical characteristics, such as increased strength, enhanced elasticity, and better thermal resistance. Additionally, these lignin fragments A contribute to optimized processing characteristics, improving the viscosity and flow behavior of the materials. This results in increased efficiency during production processes. The higher hydroxyl content also facilitates the formation of denser and more stable polymer networks, enhancing the durability and stability of the end products.

In addition to the monomeric units I and II, both lignin fragments A and lignin fragments B can comprise further monomeric units that are naturally occurring in lignin that are formed, for example, via β-β or 5-5 linkages. Typically, 45 to 80 % of all monomer units in the lignin fragments A and B are either monomer units I or II. Additional monomeric units may include various structures formed between coniferyl alcohol, sinapyl alcohol, and p-coumaryl alcohol, such as β-β or 5-5 linkages. The exact composition depends on the specific type of lignin. Different plant species and their respective lignin types can have varied proportions of monomeric units and linkages, resulting in distinct lignin structures and properties. During conventional lignin extraction, typically under acidic and elevated-temperature conditions, the β-O-4 linkages, which are the most abundant and reactive bonds in native lignin, are highly prone to cleavage. This cleavage leads to the formation of a reactive benzylic carbocation intermediate. Once formed, this intermediate can readily undergo electrophilic aromatic substitution with other lignin units, resulting in undesired carbon-carbon (C-C) condensation reactions. These reactions form stable linkages such as β-5 or 5-5 bonds, which are not present in high abundance in native lignin but accumulate during processing. The result is a highly condensed, poorly soluble, and chemically less accessible lignin structure, which poses major challenges for downstream valorization. To prevent this, an aldehyde - such as propionaldehyde - is added during the extraction process. It reacts with the α-hydroxyl group next to the β-O-4 linkage, forming a stable cyclic acetal. This stabilizes the α-position and prevents the formation of the reactive benzylic carbocation in the first place. As a result, the β-O-4 linkages remain intact, and undesired condensation reactions are largely avoided. However, naturally occurring carbon-carbon linkages in lignin, such as β-β and 5-5 bonds, are not affected by this process. These linkages are inherently more stable and do not react with the aldehyde under the conditions used in aldehyde-assisted fractionation. Therefore, there is no need to specify the "further monomeric units that are naturally occurring in lignin and are connected for example via β-β or 5-5 linkages", as they are neither affected by the aldehyde-assisted fractionation nor by the subsequent deprotection step. Thus, a typical composition of lignin fragments A and B consists of 45 to 80% monomer units I and II, preferably 60 to 75 %, while the remainder comprises other monomeric units that are naturally occurring in lignin and differ from monomeric units I and II. With the method according to the present invention, the amount of monomer unit I is reduced, while the amount of monomer unit II is increased. However, lignin fragments A always contain both monomer units I and monomer unit II.

The lignin fragments A according to the present invention have an outstanding quality, as the number of aromatic monomers that can be produced via catalytic reductive depolymerization (which cleaves ether units in native lignin structures) per gram lignin is more than 1.4 mmol, preferably even more than 1.6 mmol per gram lignin. Such a high number of monomers per gram lignin indicates that the lignin as undergone very limited degradation or condensation during extraction and therefore provides a greater density of reactive functional groups.

Preferably, lignin fragments A have an average aliphatic hydroxyl group content of more than 4 mmol/g, preferably more than 6 mmol/g and even more preferably more than 7.5 mmol/g. This elevated hydroxyl content enhances reactivity by increasing the number of reactive sites, which promotes faster and more efficient crosslinking, leading to improved mechanical properties. The average aliphatic hydroxyl group content can be controlled through the method according to the present invention, allowing for a tailored average aliphatic hydroxyl group content that meets the desired properties of the final product. Furthermore, the short alkyl chain R₁ of monomer unit I minimizes the risk of negatively impacting subsequent reactions.

Especially preferred are lignin fragments A, wherein R₁ in monomer unit I is ethyl, i.e,

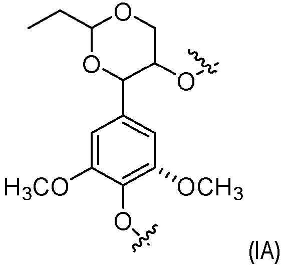

The dashed line in monomer unit IA indicates that hydroxymethyl and secondary methoxy groups are present in some, but not all, instances. The presence of propionaldehyde during aldehyde-assisted fractionation ensures effective stabilization of the resulting lignin fragments B but also allows for a very efficient deprotection step, as propionaldehyde provides an optimal balance of reactivity, selectivity, handleability, and safety. As a result, it yields lignin fragments A characterized by a high average content of aliphatic hydroxyl groups.

Lignin fragments A preferably comprise 4 to 85 monomer units, more preferably 5 to 50. Such lignin fragments A have an optimal reactivity, for example in polyurethane synthesis, where too few units may lack necessary cross-linking, while too many can complicate processing. Additionally, controlling the length of the fragments helps tailor the mechanical properties of the final product.

A further aspect of the present invention relates to a method for preparing lignin fragments A comprising at least monomer units (I) and (II) 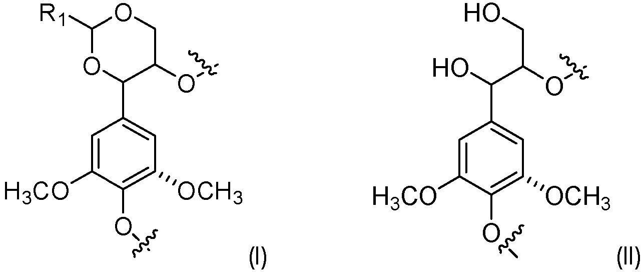 wherein
R₁ is selected from the group consisting of methyl, ethyl, propyl, isopropyl and n-butyl, and wherein the lignin fragments A have an average aliphatic hydroxyl group content of more than 3 mmol/g. The method involves the steps of
a) providing acetal protected lignin fragments B comprising at least monomer units (I), and (II) obtained by aldehyde-assisted fractionation having an average aliphatic hydroxyl group content of less than 2 mmol/g, preferably less than 1.2 mmol/g, and
b) subsequently treating said lignin fragments B through heterogeneous or homogeneous deprotection to obtain lignin fragments A.

The skilled person knows how to obtain the lignin fragments B by aldehyde-assisted fractionation having an average aliphatic hydroxyl group content of less than 2 mmol/g, preferably less than 1.2 mmol/g. Typically they are obtained for example by providing a lignocellulose-containing composition, heating said composition under acidic conditions (for example in the presence of sulfuric acid or HCl) together with an aldehyde (such as propionaldehyde), preferably at a temperature of 60 to 90°C for 2 to 20 hours, to obtain lignin fragments B. They have an average aliphatic hydroxyl group content of less than 2 mmol/g, preferably less than 1.2 mmol/g. Due to the selection of R₁ a very high protection rate can be obtained, which is important as it directly affects the efficiency of lignin stabilization and improves the yield and quality of the extracted lignin fragments B. Typically, lignin fragments B are separated before conducting the method according to the present invention, for example by filtration.

The lignin fragments B provided in step a) are subsequently treated through heterogeneous or homogeneous deprotection to obtain lignin fragments A. Due to this protection step, the lignin fragments B having an average aliphatic hydroxyl group content of less than 2 mmol/g, preferably less than 1.2 mmol/g are deprotected to obtain the lignin fragments A having an average aliphatic hydroxyl group content of more than 3 mmol/g. Thus, the amount of monomer unit I decreases, whereas the amount of monomer unit II increases. The process according to the present invention has no negative impact on the quality of the lignin, as lignin fragments A have preferably a number of monomers per gram lignin of more than 1.4 mmol, preferably even more than 1.6 mmol per gram lignin.

Preferably, the method of the invention achieves a degree of deprotection of at least 20%, more preferably at least 60%, and even more preferably at least 80%. The degree of deprotection is measured by Heteronuclear Single Quantum Coherence Spectroscopy (HSQC) and defined as follows: $Degree of deprotection : \frac{integration of the signal of monomer units \left(ii\right)}{integration of the signal of monomer units \left(i\right) + monomer unit \left(ii\right)} \times 100$

Within the context of the present invention, "homogeneous" refers to a state where lignin fragments B are uniformly distributed, resulting in a single-phase solution. This means that lignin fragments B are fully solubilized in an organic solvent. On the other hand, "heterogeneous" describes a system where lignin fragments B are not dissolved, leading to the presence of distinct phases. In this situation, lignin fragments B are in a solid, undissolved state, while the deprotection reaction occurs in the presence of boiling water or steam or a mixture thereof, creating a mixture of solid and liquid or solid and gas or solid, liquid and gas phases.

Especially good results could be obtained with homogeneous deprotection that takes place in an organic solvent in the presence of water and an acid. The organic solvent facilitates the solubilization of lignin fragments B, enabling effective interaction between water and the acid, which in turn promotes the removal of the acetal group. The reaction typically takes place at a temperature between 70°C and 120°C for 0.25 to 10 hours.

The solvent is preferably selected from the group consisting of dioxane, propylene glycol methyl ether, ethanol, isopropanol, DMSO, and DMF. Due to their excellent water miscibility, these solvents enabled the effective production of lignin fragments A with a high yield. In addition, high average aliphatic hydroxyl group content could be obtained. Especially good results could be obtained with propylene glycol methyl ether. This low-toxicity solvent allows for higher temperature reactions, and offers excellent solubility of lignin fragments A and B.

The homogenous deprotection can be conducted in the presence of an acid, preferably selected from the group consisting of HCl and H₂SO₄. The presence of an acid leads to a higher rate of average aliphatic hydroxyl group content. Particularly good results were achieved with HCl and H₂SO₄. Sulfuric acid is preferable as it does not require the use of highly corrosion resistant equipment.

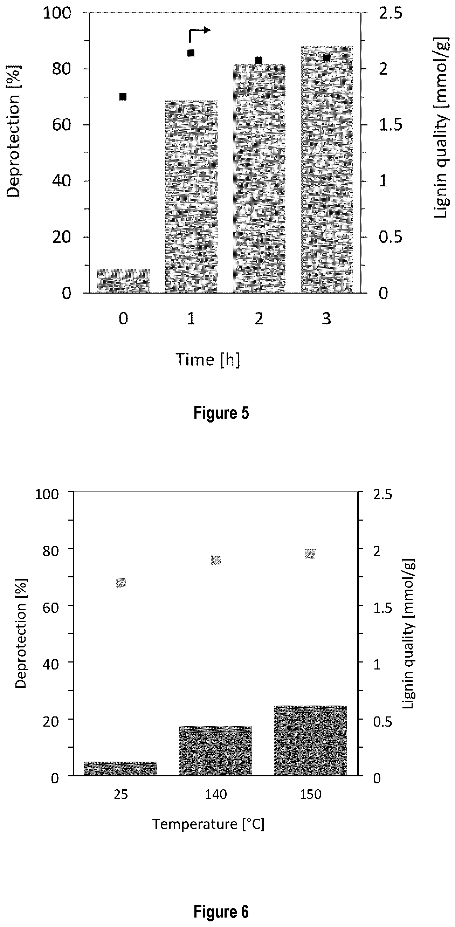

In one embodiment of the present invention the heterogenous deprotection takes place in liquid water at a pressure of at least 1 bar, preferably 4.5 to 5 bar, and ideally about 4.75 bar, thus preferably with temperatures maintained between 80°C and 180°C, preferably 140°C to 150°C The reaction time is typically between 0.2 and 12 hours. Interestingly, in this case, no lignin dissolution is required. Furthermore, the resulting lignin fragments A have a high quality, thus having a number of monomers per gram of lignin of more than 1.8 mmol/g (see Fig. 5).

In one embodiment of the present invention the heterogenous deprotection takes place in water steam at a pressure of at least 1 bar, preferably 5 to 7 bar, and ideally about 6 bar, thus preferably with temperatures maintained between 125°C and 180°C. The reaction time is typically between 0.2 and 12 hours. A higher deprotection degree is obtained than for the deprotection in liquid water.

A heterogenous deprotection in a liquid water/ water steam mixture is also possible, for example via steam explosion.

Preferably, heterogenous deprotection takes place in absence of an acid. The use of non-acidic conditions minimizes the risk of corrosion and damage reaction vessels, leading to reduced maintenance and a longer lifespan for the apparatus.

Preferably, heterogenous deprotection takes place in absence of an organic solvent. This approach reduces environmental impact by minimizing the emission of volatile organic compounds.

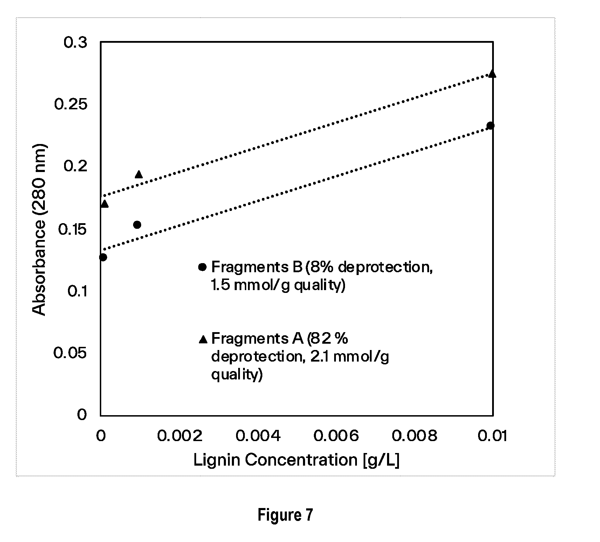

A further aspect of the present invention refers to the use of the lignin fragments A as a UV-absorbing agent, antioxidant, oil absorber, or antimicrobial agent, particularly in cosmetic compositions, sunscreens, or skincare formulations. The aromatic rings within lignin fragments A enhance its ability to absorb UV radiation, effectively shielding the skin from harmful rays and preventing photoaging and skin damage (see Fig. 7). Moreover, their biobased origin makes them a preferable alternative to synthetic UV filters and antioxidants commonly utilized in traditional cosmetics. In cosmetic formulations, lignin fragments A can enhance stability, provide a broader spectrum of UV protection, and incorporate antioxidant benefits that promote skin health. Its oil-absorbing capabilities are particularly advantageous in products designed for oily or acne-prone skin, helping to manage excess sebum and reduce breakouts. Additionally, its antimicrobial properties can contribute to the preservation of cosmetic products, extending shelf life while offering further protection for the skin.

A further aspect of the present invention refers to the use of the lignin fragments A as a reactive polyol in the preparation of materials selected from the group consisting of polyurethanes, polyester resins, composite materials, thermoset resins, coatings, elastomers, and functional materials. Lignin fragments A boast several favorable properties, making them an attractive building block for various applications. Being biobased, they contribute to sustainability by deriving from renewable resources, which helps to reduce dependence on fossil fuels. Additionally, lignin fragments A are non-toxic, ensuring safety in applications where health and safety regulations are paramount, such as in consumer products. One of the significant advantages of lignin fragments A are their flexibility in chain length, allowing for customization based on specific requirements. This adaptability enables the formulation of materials that range from highly flexible elastomers to more rigid thermoset plastics. Furthermore, the average content of aliphatic hydroxyl groups in lignin fragments A can be tailored to achieve the desired reactivity and properties, making it possible to fine-tune the performance of the final product.

Preferably, said composite materials comprise a polymer matrix comprising lignin fragments A reinforced with fibers or particles, for applications in the automotive, aerospace, building, or sporting goods industries. The incorporation of lignin fragments A into the polymer matrix can enhance properties such as strength, durability, and flexibility, making it suitable for the demanding requirements of these applications. By leveraging its biobased and non-toxic characteristics, lignin fragments A can also contribute to more sustainable practices within these industries.

### Figures:

Fig. 1 shows lignin linkages identification by HSQC as a function of treatment time in dioxane/HCl/water. I stands for β-O-4 protected (monomer unit I), II for β-O-4 unprotected (monomer unit II), III for β-β linkage (i.e., carbon-carbon (C-C) bond between two lignin monomers).
Fig. 2 shows % deprotection (left axis) and quality (right axis) of lignin fragments B (at 0 hours) and lignin fragments A as a function of treatment time in dioxane/HCl/water. The arrow shows that the squares correspond to the right y axis.
Fig. 3 shows confirmation of deprotection by PNMR before (at 6% deprotection) and after treatment in dioxane/HCl/water. x corresponds to the theoretical value, and square the actually measured value.
Fig. 4 shows % deprotection with different solvents and different acids all at 80°C and with 3 hour reaction time
Fig. 5 shows % deprotection (left axis) and quality (right axis) with PGME/H₂SO₄ at 90°C as a function of reaction time. The arrow shows that the squares correspond to the right y axis.
Fig. 6 shows % deprotection (bars) and lignin quality (squares) with time in by heating in liquid water at various temperatures in a sealed pressure vessel.
Fig. 7 shows UV-absorption of lignin fragments A and B at a wavelength of 280nm.
Fig. 8 shows HSQC spectra of the propionaldehyde protected lignin (degree of deprotection: 6%) (A) and the lignin fragment obtained after the treatment with PGME/H₂SO₄/H₂O (degree of deprotection: 75%) (B), depicting the reduction of signals corresponding to the monomer unit I and increase of the signal assigned to monomer unit II.

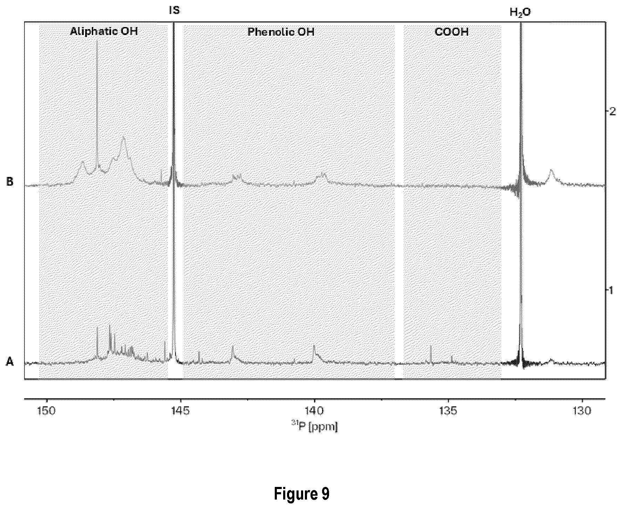

Fig 9. shows ³¹P-NMR spectra of the propionaldehyde protected lignin (degree of deprotection: 6%) (A) and the lignin fragment after the treatment with PGME/H₂SO₄/H₂O (degree of deprotection: 83%) (B), demonstrating the increase of aliphatic hydroxyl groups after the reaction.

### Examples:

### Characterization of the lignin fragments

### Method 1: Monomer yield by hydrogenolysis

100 mg of the lignin in a high-pressure Parr reactor together with 100 mg of catalyst (5wt% Ru/C) and 20 mL of ethanol. The reactor was purged twice before being pressurized with 10 bars of hydrogen. The mixture was heated and maintained at 250°C for three hours. After the reaction, the reactor was cooled down to room temperature. The resulting solution was filtered and analyzed by GC-FID. The quality of the lignin is indicated in monomers per gram lignin.

### Method 2: Determination of the deprotection degree by Heteronuclear Single Quantum Coherence Spectroscopy (HSQC)

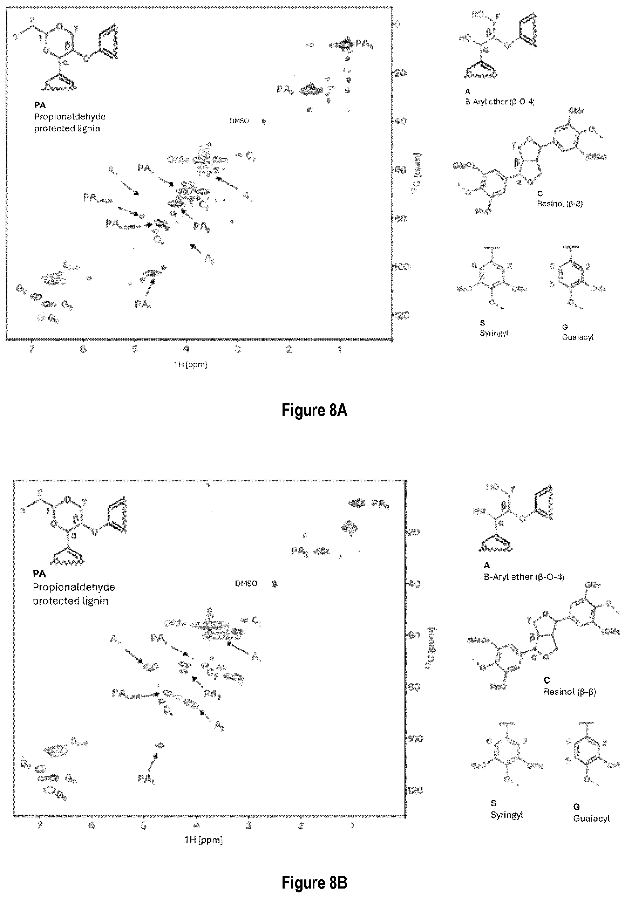

40 mg of lignin fragments A or B were dissolved in 0.5 mL deuterated DMSO (DMSO-d6). The spectra were recorded on a 300 MHz Bruker advance spectrometer acquiring 32 scans and setting a 2 seconds relaxation delay (d1). The signals related to aromatic syringyl and guaiacyl units were integrated and considered for the determination of the total aromatic content. Specific signals were used to quantify the relative abundance of two monomer units over the total aromatic content: propionaldehyde acetal signal (monomer unit I) and the α position of the β-aryl ether (monomer unit II) (Fig. 8). The degree of deprotection was determined by calculating the percentage of monomer unit (ii) present in the lignin fragment, according to the following equation: $Degree of deprotection : \frac{integration of the signal of monomer units \left(ii\right)}{integration of the signal of monomer units \left(i\right) + monomer unit \left(ii\right)} \times 100$

### Method 3: Quantification of the hydroxyl content by Phosphorus-31 Nuclear Magnetic Resonance (³¹P-NMR):

The three following solutions were prepared prior to the analysis: 1.6:1 (v/v) pyridine:chloroform-d (solution A), 19 mg/mL cyclohexanol in 1.6:1 (v/v) pyridine:chloroform-d (solution B), and 11.4 mg/mL chromium(III)acetylacetonate in 1.6:1 (v/v) pyridine:chloroform-d (solution C). For the analysis, 30 mg sample was dissolved in a mixture consisting of 0.5 mL solution A, 0.2 mL solution B, and 50 µL solution C. Once dissolved, 50 µL 2-chloro-4,4,5,5-tetramethyl-1,3,2-dioxaphospholane (TMPD) was added as the phosphorylating agent. The NMR spectra were recorded on a 300 MHz Bruker advance spectrometer. The aliphatic hydroxyl groups, the phenolic hydroxyl groups, and the carboxylic acids were quantified.

### Method 4: UV-absorption by UV-Vis Spectrometry

The UV absorption profiles of various lignins were analysed using a Thermo Fisher Evolution 220 UV-Visible Spectrophotometer. The lignin samples were dissolved in 1-methoxy-2-propanol at concentrations of 0.01 g/L, 0.001 g/L, and 0.0001 g/L, and placed in a quartz cuvette with a path length of 1 cm. The wavelengths used ranged from 195 to 800 nm. The absorption of the lignin fragments A and B at 280 nm were plotted against concentration in Figure 7.

### Example 1: Acetal removal of propionaldehyde protected lignin in dioxane with hydrochloric acid at low lignin concentration

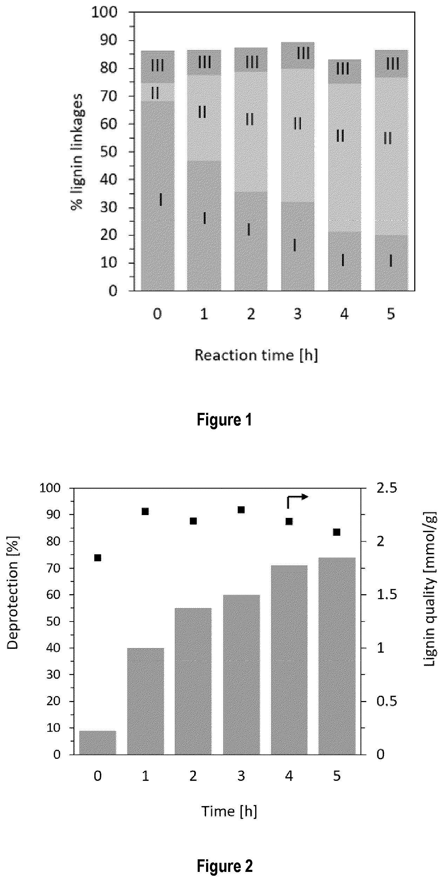

6 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dissolved in 330 mL of 1,4 - dioxane. 60 mL of a 1 molar aqueous solution of hydrochloric acid was slowly poured into the reaction medium. The mixture was heated and maintained at 80°C for 3 hours. Then, the solution was cooled down to room temperature and an aqueous solution of 2 molar sodium hydroxide was used to increase to pH to a value of 5. 1,4 - dioxane was evaporated under reduced pressure until a slightly viscous liquid was obtained. The remaining solution was added dropwise onto water with vigorous agitation to precipitate a solid. The latter was filtered on a nylon filter (0.45 µm pore size) and dried at 50°C under reduced pressure for at least 24 hours. A powder with a pinkish color was collected (mass yield: 52%, degree of deprotection: 78%, monomer yield: 2.0 mmol of monomers per grams of lignin, aliphatic hydroxyl groups: 5.4 mmol/g, phenolic hydroxyl groups: 1.2 mmol/g) (Fig. 1 to 3).

### Example 2: Acetal removal of propionaldehyde protected lignin in dioxane with sulfuric acid at low lignin concentration

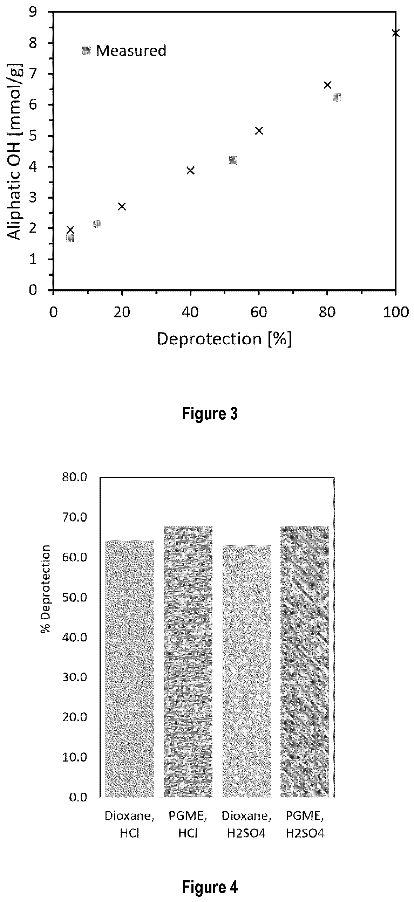

The example 2 was carried out as example 1, wherein the 1 molar aqueous solution of hydrochloric acid was substituted by a 1 molar aqueous solution of sulfuric acid. A powder with a pinkish color was collected (mass yield: 66%, degree of deprotection: 63%, monomer yield: 1.8 mmol of monomers per grams of lignin; Fig. 4).

### Example 3: Acetal removal of propionaldehyde protected lignin in propylene glycol methyl ether with hydrochloric acid at low lignin concentration

The example 3 was carried out as example 1, wherein the 1,4 - dioxane was substituted by propylene glycol methyl ether. A powder with a pinkish color was collected (mass yield: 62%, degree of deprotection: 68%; Fig. 4).

### Example 4: Acetal removal of propionaldehyde protected lignin in propylene glycol methyl ether with sulfuric acid at low lignin concentration

4 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dissolved in 480 mL of propylene glycol methyl ether. 120 mL of a 1 molar aqueous solution of sulfuric acid was slowly poured into the reaction medium. The mixture was heated and maintained at 90°C for 2 hours. Then, the solution was cooled down to room temperature and an aqueous solution of 2 molar sodium hydroxide was used to increase to pH to a value of 5. propylene glycol methyl ether was evaporated under reduced pressure until a slightly viscous liquid was obtained. The remaining solution was added dropwise onto water with vigorous agitation to precipitate a solid. The latter was filtered on a nylon filter (0.45 µm pore size) and dried at 50°C under reduced pressure for at least 24 hours. A powder with a purple color was collected (mass yield: 48%, degree of deprotection: 83%, monomer yield: 2.1 mmol of monomers per grams of lignin, aliphatic hydroxyl groups: 6.2 mmol/g, phenolic hydroxyl groups: 1.3 mmol/g; Fig. 5).

### Example 5: Acetal removal of propionaldehyde protected lignin in dioxane with hydrochloric acid at increased lignin concentration

2 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dissolved in 15 mL of 1,4 - dioxane. 3 mL of a 1 molar aqueous solution of hydrochloric acid was slowly poured into the reaction medium. The mixture was heated and maintained at 80°C for 3 hours. Then, the solution was cooled down to room temperature and an aqueous solution of 50%wt sodium hydroxide was used to increase to pH to a value of 5. 1,4 - dioxane was evaporated under reduced pressure until in a slightly viscous liquid was obtained. The remaining solution was added dropwise onto water with vigorous agitation to precipitate a solid. The latter was filtered on a nylon filter (0.45 µm pore size) and dried at 50°C under reduced pressure for at least 24 hours. A powder with a pinkish color was collected (mass yield: 65%, degree of deprotection: 49%, monomer yield: 1.9 mmol of monomers per grams of lignin).

### Example 6: Acetal removal of propionaldehyde protected lignin in dioxane with higher hydrochloric acid amount at low lignin concentration

2 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dissolved in 105 mL of 1,4 - dioxane. 45 mL of a 1 molar aqueous solution of hydrochloric acid was slowly poured into the reaction medium. The mixture was heated and maintained at 80°C for 3 hours. Then, the solution was cooled down to room temperature and an aqueous solution of 50%wt sodium hydroxide was used to increase to pH to a value of 5. 1,4 - dioxane was evaporated under reduced pressure until a slightly viscous liquid was obtained. The remaining solution was added dropwise onto water with vigorous agitation to precipitate a solid. The latter was filtered on a nylon filter (0.45 µm pore size) and dried at 50°C under reduced pressure for at least 24 hours. A powder with a dark red color was collected (mass yield: 54%, degree of deprotection: 75%, monomer yield: 1.9 mmol of monomers per grams of lignin).

### Example 7: Acetal removal of propionaldehyde protected lignin in propylene glycol methyl ether with low sulfuric acid concentration and low lignin concentration

The example 8 was carried out as example 4, wherein the 1 molar aqueous solution of sulfuric acid. was substituted by a 0.1 molar aqueous solution of sulfuric acid, and the temperature was increased from 80°C to 100°C. A powder with a light pink color was collected (mass yield: 55%, degree of deprotection: 58%, monomer yield: 1.8 mmol of monomers per grams of lignin).

### Example 8: Acetal removal of propionaldehyde protected lignin in propylene glycol methyl ether with sulfuric acid at 120°C and high lignin concentration

5 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dissolved in 17 mL of propylene glycol methyl ether. 3 mL of a 1 molar aqueous solution of sulfuric acid was slowly poured into the reaction medium. The mixture was heated and maintained at 120°C for 30 minutes. Then, the solution was cooled down to room temperature and an aqueous solution of 50%wt sodium hydroxide was used to increase to pH to a value of 5. propylene glycol methyl ether was evaporated under reduced pressure until a slightly viscous liquid was obtained. The remaining solution was added dropwise onto water with vigorous agitation to precipitate a solid. The latter was filtered on a nylon filter (0.45 µm pore size) and dried at 50°C under reduced pressure for at least 24 hours. A powder with a pinkish color was collected (mass yield: 83%, degree of deprotection: 50%, monomer yield: 1.8 mmol of monomers per grams of lignin).

### Example 9: Heterogeneous acetal removal of propionaldehyde protected lignin in water

In a pressure resistant vessel equipped with a magnetic stir bar, 0.25 grams of propionaldehyde protected lignin (PA-lignin, extracted from beech wood, degree of deprotection: 6%, monomer yield: 1.6 mmol of monomers per grams of lignin, aliphatic hydroxyl groups: 1.7 mmol/g, phenolic hydroxyl groups: 0.9 mmol/g), was dispersed in 20 mL distilled water. The reaction mixture was heated and held at 150°C (corresponding to about 4.75 bar) for 6 hours, after which the solution was cooled down to room temperature. The powder was filtered on a nylon filter (0.45 µm pore size) dried at 50°C under reduced pressure for at least 24 hours. A powder with a beige color was collected (mass yield: 52%, degree of deprotection: 25%, monomer yield: 1.9 mmol of monomers per grams of lignin, Fig. 6)

### Comparative Example 10: Heterogeneous acetal removal of formaldehyde protected lignin in water

In a pressure resistant vessel equipped with a magnetic stir bar, 0.25 grams of formaldehyde protected lignin (FA-lignin, extracted from beech wood degree of deprotection: 2%, monomer yield: 1.6 mmol of monomers per grams of lignin, aliphatic hydroxyl groups: 1.4 mmol/g, phenolic hydroxyl groups: 0.9 mmol/g), was dispersed in 20 mL distilled water. The reaction mixture was heated and held at 140°C for 6 hours, after which the solution was cooled down to room temperature. The powder was filtered on a nylon filter (0.45 µm pore size) dried at 50°C under reduced pressure for at least 24 hours. A powder with a black color was collected (mass yield: 91%). The obtained lignin was insoluble in any organic solvent and prevented further characterization.

### Comparative Example 11: Heterogeneous acetal removal of glyoxylic acid protected lignin in water

In a pressure resistant vessel equipped with a magnetic stir bar, 0.25 grams of glyoxylic acid protected lignin (GA-lignin, extracted from beech wood, degree of deprotection: 43%, monomer yield: 1.2 mmol of monomers per grams of lignin, aliphatic hydroxyl groups: 2.8 mmol/g, phenolic hydroxyl groups: 1.1 mmol/g), was dispersed in 20 mL distilled water. The reaction mixture was heated and held at 140°C for 6 hours, after which the solution was cooled down to room temperature. The powder was filtered on a nylon filter (0.45 µm pore size) dried at 50°C under reduced pressure for at least 24 hours. A powder with a black color was collected (mass yield: 72%). The obtained lignin was insoluble in any organic solvent and prevented further characterization.

### Example 12: Fractionation of wood to produce lignin fragments B

400 g of beech wood was added to a 5 L round-bottom flask equipped with an overhead stirrer and placed in an oil bath. To the flask, 1320 g of 2-methyltetrahydrofuran, 144 g of propionaldehyde, 36 g of water, and 60 g of 97% sulfuric acid were added. The reaction mixture was stirred and heated at reflux for 3 hours. After completion, the mixture was allowed to cool to room temperature and was then neutralized with 94 g of 50 wt% sodium hydroxide solution. The resulting mixture was filtered through a sintered glass Büchner funnel (P4), separating the solid cellulose pulp from the liquid mother liquor. The mother liquor was concentrated on a rotary evaporator at 55 °C under 50 mbar. After cooling to room temperature, 1050 g of antisolvent (10% ethyl acetate in hexanes) was added to the oil under stirring to precipitate the lignin. The precipitated lignin was collected by filtration through a 0.45 µm nylon membrane filter, rinsed with antisolvent, and then dried in a vacuum oven at 40 °C overnight, yielding 80 g of beige lignin powder (degree of deprotection: 6%, monomer yield: 1.6 mmol of monomers per grams of lignin, aliphatic hydroxyl groups: 1.7 mmol/g, phenolic hydroxyl groups: 0.9 mmol/g).

## Claims

1. Lignin fragments A comprising at least monomer units (I) and (II) 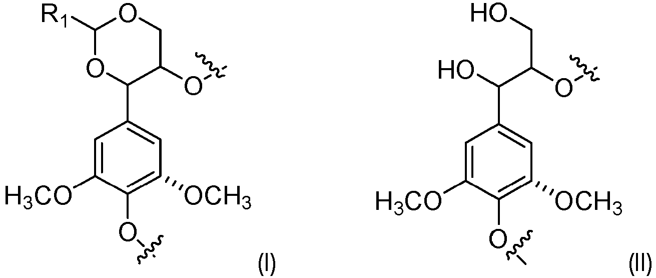 wherein
R₁ is selected from the group consisting of methyl, ethyl, propyl, isopropyl and n-butyl, and wherein the lignin fragments A have an average aliphatic hydroxyl group content of more than 3 mmol/g.

2. Lignin fragments A according to claim 1, wherein the lignin fragments A have an average aliphatic hydroxyl group content of more than 4 mmol/g, preferably more than 6 mmol/g and even more preferably more than 7.5 mmol/g.

3. Lignin fragments A according to any of the preceding claims, wherein R₁ is ethyl.

4. Lignin fragments A according to any of the preceding claims, wherein the lignin fragments comprise 4 to 85 monomer units, preferably 5 to 50.

5. Method for preparing lignin fragments A according to any of claims 1 to 4 by
a) providing acetal protected lignin fragments B comprising at least monomer units (I), and (II) obtained by aldehyde-assisted fractionation having an average aliphatic hydroxyl group content of less than 2 mmol/g, preferably less than 1.2 mmol/g, and
b) subsequently treating said lignin fragments B through heterogeneous or homogeneous deprotection to obtain lignin fragments A.

6. Method according to claim 5, wherein the deprotection takes place in an organic solvent in the presence of water and an acid.

7. Method according to claim 6, wherein the solvent is selected from the group consisting of dioxane, propylene glycol methyl ether, ethanol, isopropanol, DMSO, and DMF.

8. Method according to any of claims 5 to 7, wherein the deprotection is conducted in the presence of an acid, preferably selected from the group consisting of HCl and H₂SO₄, preferably H₂SO₄.

9. Method according to claim 5, wherein the heterogenous deprotection takes place in liquid water at a pressure of at least 1 bar, preferably 4.5 to 5 bar.

10. Method according to claim 5, wherein the heterogenous deprotection takes place in water steam at a pressure of at least 1 bar, preferably 5 to 7 bar.

11. Method according to any of claims 9 or 10, wherein the deprotection takes place in absence of an acid.

12. Method according to any of claims 9 to 11, wherein the deprotection takes place in absence of an organic solvent.

13. Use of the lignin fragments A according to any of claims 1 to 5 as a UV-absorbing agent, antioxidant, oil absorber, or antimicrobial agent, particularly in cosmetic compositions, sunscreens, or skincare formulations.

14. Use of the lignin fragments A according to any of claims 1 to 5 as a reactive polyol in the preparation of materials selected from the group consisting of polyurethanes, polyester resins, composite materials, thermoset resins, coatings, elastomers, and functional materials.

15. Use according to claim 14, wherein said composite materials comprise a polymer matrix comprising lignin fragments A reinforced with fibers or particles, for applications in the automotive, aerospace, building, or sporting goods industries.
